# EUROPEAN PATENT APPLICATION

(11) **EP 4 751 880 A1**
(43) Date of publication of application: **03.06.2026**
(21) Application number: 25213954.8
(22) Date of filing: 06.11.2025
(51) Int. Cl.: B29C 63/02

(54) **CUTTING AND ATTACHING SYSTEM FOR SCREEN PROTECTOR HAVING HIGH HARDNESS**

(30) Priority: 15.11.2024 US 202463721394 P
(71) Applicant: Lin, Chia-Ching, Taipei City 104 (TW)
(72) Inventor: Lin, Chia-Ching, Taipei City 104 (TW)
(74) Representative: Viering, Jentschura & Partner mbB Patent- und Rechtsanwälte

(57) **Abstract**

A cutting and attaching system for a screen protector (200S) having a high hardness includes a cutting apparatus (100), a universal sheet (200) having a hardness of at least 5H, and a film applicator (400). The cutting apparatus (100) can perform a cutting process to the universal sheet (200) through a cutter (1) thereof according to the film applicator (400) and a mobile apparatus (M), thereby forming a screen protector (200S) that is suitable for being applied to the film applicator (400) and the mobile apparatus (M).

## Description

### FIELD OF THE INVENTION

The present invention relates to a screen protector and a cutter, and more particularly to a cutting and attaching system that is provided for a screen protector having a high hardness and that is suitable to cut a universal sheet having at least 5H hardness.

### BACKGROUND OF THE INVENTION

A conventional cutter for screen protectors is provided only for cutting a soft screen protector having a hardness less than 3H, thereby enabling the soft screen protector to form a shape that can fit on any mobile apparatus. However, a hardened screen protector having a hardness greater than or equal to 5H is difficult to be cut for satisfying a shape or quality of a mobile apparatus through a conventional cutting manner (e.g., the hardened screen protector can easily have burrs or a scratchy structure after being cut). Accordingly, for manufacturers that provide screen protectors to be attached onto any mobile apparatus, the hardened screen protectors can only be inventoried in various shapes and sizes in order to fit different mobile apparatuses, which not only greatly increases inventory costs, but also makes it difficult to meet screen protector requirements of less common brands of mobile apparatuses.

### SUMMARY OF THE INVENTION

In response to the above-referenced technical inadequacies, the present invention provides a cutting and attaching system for a screen protector having a high hardness for effectively improving on the issues associated with conventional cutting manners.

In order to solve the above-mentioned problems, one of the technical aspects adopted by the present invention is to provide a cutting and attaching system for a screen protector having a high hardness. The cutting and attaching system includes a cutting apparatus, a universal sheet, and a film applicator. The cutting apparatus includes a carrying machine, a displacement mechanism, a processing module, and a cutter. The displacement mechanism is assembled to the carrying machine and is movable relative to the carrying machine. The processing module is assembled to the carrying machine. The processing module is electrically coupled to the displacement mechanism and is configured to move the displacement mechanism along a first cutting path and a second cutting path that is different from the first cutting path. The second cutting path corresponds to a contour of a screen of a mobile apparatus. The cutter is assembled to the displacement mechanism and has a cutting segment exposed from the displacement mechanism. The displacement mechanism is configured to move the cutting segment between an upper position and a lower position that is lower than the upper position. The universal sheet is configured to be cut to form the screen protector through a cutting process of the cutting apparatus. The universal sheet includes a usage layer, a buffer layer, a release layer, and a bottom layer. The usage layer includes a hardened film and a bonding film that is formed on the hardened film, and a hardness of the hardened film is at least 5H. The buffer layer has a hardness that is less than the hardness of the hardened film. The release layer is attached onto the bonding film. The bottom layer is attached onto the release layer. When the universal sheet is placed on the cutting apparatus under the cutting process, the bottom layer of the universal sheet is fixed to the carrying machine, the displacement mechanism is driven by the processing module to enable the cutting segment of the cutter at the upper position to cut the buffer layer along the first cutting path for forming a positioning contour, and to cut the buffer layer and the usage layer along the second cutting path for forming a screen contour, such that the buffer layer and the usage layer jointly define a screen region and a positioning region that is arranged at one side of the screen region and that has a plurality of positioning holes and an arrangement tab. The film applicator is located at a downstream of the cutting apparatus and includes an accommodating chamber and a plurality of positioning pillars. The accommodating chamber is configured to hold the mobile apparatus. The positioning pillars have a relative position that is identical to a relative position of the positioning holes of the positioning contour. Moreover, a relative position between the positioning pillars and the screen of the mobile apparatus is identical to a relative position between the positioning holes and the screen contour. When the accommodating chamber of the film applicator holds the mobile apparatus, a pull strip of the cutting and attaching system is adhered to a portion of the release layer corresponding in position to the arrangement tab and is folded to be stacked on the release layer, and the positioning holes of the positioning region are respectively sleeved at the positioning pillars to place the pull strip between the release layer and the screen of the mobile apparatus, so that the pull strip is configured to be pulled out of the accommodating chamber to remove the release layer from the bonding film for enabling the release layer to remove particles on the screen through electrostatic adsorption.

In one of the possible or preferred embodiments, when the universal sheet is placed on the cutting apparatus under the cutting process, the bottom layer of the universal sheet is fixed to the carrying machine, the displacement mechanism is driven by the processing module to enable the cutting segment of the cutter at the lower position to cut the buffer layer, the usage layer, and the release layer along the third cutting path for forming a peripheral contour that surrounds the positioning contour and the screen contour. A portion of the buffer layer, a portion of the usage layer, and a portion of the release layer are arranged outside of the peripheral contour and are removed.

In one of the possible or preferred embodiments, the buffer layer includes a first buffer film attached onto the hardened film and a second buffer film that is attached onto the first buffer film. The hardness of the hardened film, a hardness of the first buffer film, and a hardness of the second buffer film sequentially decrease.

In one of the possible or preferred embodiments, the universal sheet has a printed pattern that is formed between the first buffer film and the second buffer film.

In one of the possible or preferred embodiments, a thickness of the hardened film, a thickness of the first buffer film, and a thickness of the second buffer film sequentially decrease.

In one of the possible or preferred embodiments, a thickness of the buffer layer is within a range from 70 µm to 250 µm, a thickness of the hardened film is within a range from 70 µm to 250 µm, and a thickness of the release layer is within a range from 50 µm to 250 µm.

In one of the possible or preferred embodiments, the film applicator includes a carrying seat, a dust-proof shield, and a rolling mechanism. The carrying seat includes a holder and a localizer. The holder has the accommodating chamber, and the holder has a first end portion and a second end portion that is opposite to the first end portion. The localizer is assembled to the holder and is arranged adjacent to the first end portion. The localizer is configured to be detachably inserted into a charging port of the mobile apparatus. The dust-proof shield is pivotally connected to the first end portion of the holder, such that the dust-proof shield is rotatable relative to the holder between an open position and a closed position. The rolling mechanism includes a linear guideway, an operation bracket, and a roller. The linear guideway includes a straight track fixed to the dust-proof shield and a slider that is slidably assembled to the straight track. The operation bracket is movably assembled to the holder and is fixed to the slider. The operation bracket is movable along the straight track from a first position to a second position relative to the holder through the slider. The roller is assembled to the operation bracket and is arranged in the dust-proof shield corresponding in position to the accommodating chamber of the holder. When the operation bracket is located at the first position, the dust-proof shield is rotatable toward the open position for driving the rolling mechanism to rotate simultaneously, so as to separate the operation bracket and the roller from the holder.

In one of the possible or preferred embodiments, the localizer is arranged in the accommodating chamber and includes a rotation shaft and two plugs respectively connected to two opposite sides of the rotation shaft. The rotation shaft is pivotally connected to the holder, and the localizer is rotatable by at least 180° relative to the holder. The two plugs have different shapes for being assembled to different types of the charging port.

In one of the possible or preferred embodiments, when the carrying seat holds the mobile apparatus therein through the localizer and the screen protector is positioned to the positioning pillars after the pull strip is pulled out of the accommodating chamber, the operation bracket is movable from the first position to the second position through the linear guideway for enabling the roller to press the screen protector so as to attach the hardened film onto the screen.

In one of the possible or preferred embodiments, the carrying seat further includes a clamping mechanism movably assembled to the holder and arranged adjacent to the second end portion. The clamping mechanism includes an elastic member assembled to the holder and an abutting seat. The abutting seat is arranged in the accommodating chamber and is connected to the elastic member. The abutting seat is configured to tend to move toward the first end portion through an elasticity of the elastic member. The abutting seat includes a flat edge for abutting an end of the mobile apparatus arranged away from the charging port.

In order to solve the above-mentioned problems, one of the technical aspects adopted by the present invention is to provide a cutting and attaching system for a screen protector having a high hardness. A cutting and attaching system for a screen protector having a high hardness. The cutting and attaching system includes a cutting apparatus, a universal sheet, and a film applicator. The cutting apparatus includes a carrying machine, a displacement mechanism, a processing module, and a cutter. The displacement mechanism is assembled to the carrying machine and is movable relative to the carrying machine. The processing module is assembled to the carrying machine. The processing module is electrically coupled to the displacement mechanism and is configured to move the displacement mechanism along a first cutting path and a second cutting path that is different from the first cutting path. The second cutting path corresponds to a contour of a screen of a mobile apparatus. The cutter is assembled to the displacement mechanism and has a cutting segment exposed from the displacement mechanism. The displacement mechanism is configured to move the cutting segment between an upper position and a lower position that is lower than the upper position. The universal sheet is configured to be cut to form the screen protector through a cutting process of the cutting apparatus. The universal sheet includes a usage layer, a buffer layer, a release layer, and a bottom layer. The usage layer includes a hardened film and a bonding film that is formed on the hardened film, and a hardness of the hardened film is at least 5H. The buffer layer has a hardness that is less than the hardness of the hardened film. The release layer is attached onto the bonding film. The bottom layer is attached onto the release layer. When the universal sheet is placed on the cutting apparatus under the cutting process, the bottom layer of the universal sheet is fixed to the carrying machine, the displacement mechanism is driven by the processing module to enable the cutting segment of the cutter at the upper position to cut the buffer layer along the first cutting path for forming a positioning contour, and to cut the buffer layer and the usage layer along the second cutting path for forming a screen contour, such that the buffer layer and the usage layer jointly define a screen region and a positioning region that is arranged at one side of the screen region and that has a plurality of positioning holes and an arrangement tab. The film applicator is located at a downstream of the cutting apparatus and includes a localizer and a plurality of positioning pillars. The localizer is configured to be detachably inserted into a charging port of the mobile apparatus. The positioning pillars are formed on the localizer and have a relative position that is identical to a relative position of the positioning holes of the positioning contour. Moreover, a relative position between the positioning pillars and the screen of the mobile apparatus is identical to a relative position between the positioning holes and the screen contour. When the localizer is inserted into the charging port of the mobile apparatus, the positioning holes of the positioning region are respectively sleeved at the positioning pillars to place the release layer toward the screen of the mobile apparatus, and the release layer is configured to be removed from the bonding film for removing particles on the screen through electrostatic adsorption.

In one of the possible or preferred embodiments, when the universal sheet is placed on the cutting apparatus under the cutting process, the bottom layer of the universal sheet is fixed to the carrying machine, the displacement mechanism is driven by the processing module to enable the cutting segment of the cutter at the lower position to cut the buffer layer, the usage layer, and the release layer along the third cutting path for forming a peripheral contour that surrounds the positioning contour and the screen contour. A portion of the buffer layer, a portion of the usage layer, and a portion of the release layer are arranged outside of the peripheral contour and are removed.

In one of the possible or preferred embodiments, the buffer layer includes a first buffer film attached onto the hardened film and a second buffer film that is attached onto the first buffer film. The hardness of the hardened film, a hardness of the first buffer film, and a hardness of the second buffer film sequentially decrease.

In one of the possible or preferred embodiments, the universal sheet has a printed pattern that is formed between the first buffer film and the second buffer film.

In one of the possible or preferred embodiments, a thickness of the hardened film, a thickness of the first buffer film, and a thickness of the second buffer film sequentially decrease.

Therefore, the cutting and attaching system in the present invention is operated through the cooperation of the cutting apparatus, the universal sheet, and the film applicator, so that the cutting apparatus can perform the cutting process to the universal sheet having at least 5H hardness according to the film applicator and the mobile apparatus, thereby forming the screen protector that is suitable for being applied to the film applicator and the mobile apparatus and that has no burrs and no scratchy structure. Accordingly, the cutting and attaching system can be used to implement a customized film attaching requirement by cutting the universal sheet until attaching the screen protector onto the mobile apparatus.

These and other aspects of the present invention will become apparent from the following description of the embodiment taken in conjunction with the following drawings and their captions, although variations and modifications therein may be affected without departing from the scope of the novel concepts of the invention.

### BRIEF DESCRIPTION OF THE DRAWINGS

The described embodiments may be better understood by reference to the following description and the accompanying drawings, in which:
FIG. 1 is a schematic view of a cutting and attaching system for a screen protector having a high hardness according to a first embodiment of the present invention;
FIG. 2 is a schematic perspective view of a cutter of the cutting and attaching system according to the first embodiment of the present invention;
FIG. 3 is a schematic perspective view of FIG. 2 from another angle of view;
FIG. 4 is a schematic front view of FIG. 2;
FIG. 5 is a schematic side view of FIG. 2;
FIG. 6 is a schematic front view of FIG. 3;
FIG. 7 is a schematic enlarged view of part VII of FIG. 6;
FIG. 8 is a schematic view showing the cutter of FIG. 1 that cuts a universal sheet along a first cutting path and a second cutting path;
FIG. 9 is a schematic view showing the cutter of FIG. 1 that cuts the universal sheet along a third cutting path;
FIG. 10 is a schematic sectional view taken along line X-X of FIG. 9;
FIG. 11 is a schematic sectional view showing a pull strip connected to the screen protector;
FIG. 12 is a schematic sectional view showing the pull strip that is folded to be stacked on the screen protector;
FIG. 13 is a schematic perspective view of a film applicator as a dust-proof shield in a closed position according to the present invention;
FIG. 14 is a schematic perspective view of the film applicator as the dust-proof shield in an open position according to the present invention;
FIG. 15 is a schematic sectional view taken along line XV-XV of FIG. 13;
FIG. 16 is a schematic sectional view taken along line XVI-XVI of FIG. 13;
FIG. 17 is a schematic sectional view taken along line XVII-XVII of FIG. 13;
FIG. 18 is a schematic view showing a subsequent operation of the film applicator of FIG. 15;
FIG. 19 is a schematic view showing a subsequent operation of the film applicator of FIG. 18;
FIG. 20 is a schematic view showing a subsequent operation of the film applicator of FIG. 19;
FIG. 21 is a schematic view showing a subsequent operation of the film applicator of FIG. 20;
FIG. 22 and FIG. 23 are schematic perspective views showing the film applicator completely applying the screen protector according to the first embodiment of the present invention;
FIG. 24 is a schematic exploded view of the film applicator, the film applicator, and the mobile apparatus according to a second embodiment of the present invention;

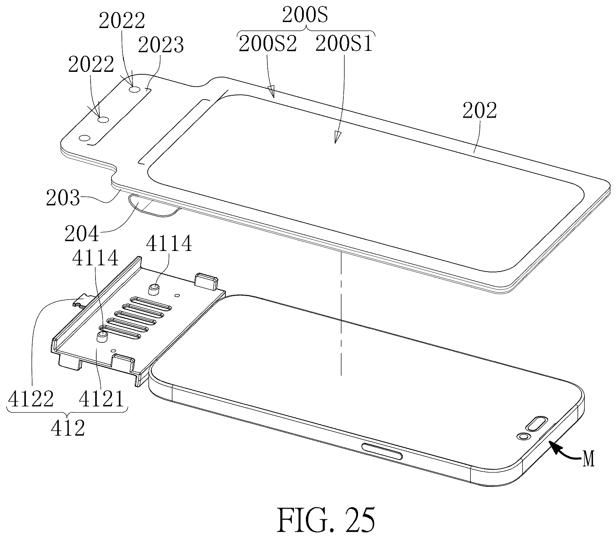

FIG. 25 is a schematic view showing a subsequent operation of the film applicator of FIG. 24;

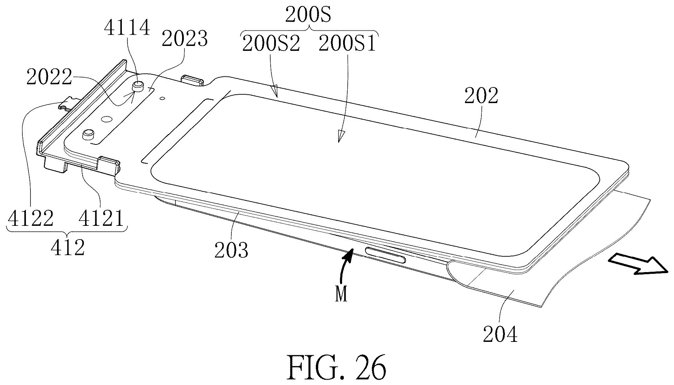

FIG. 26 is a schematic view showing a subsequent operation of the film applicator of FIG. 25;

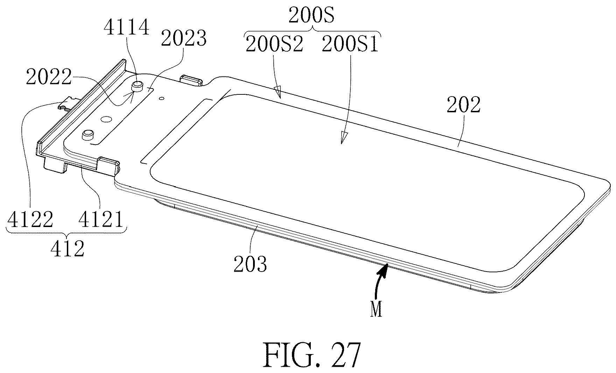

FIG. 27 is a schematic view showing a subsequent operation of the film applicator of FIG. 26;

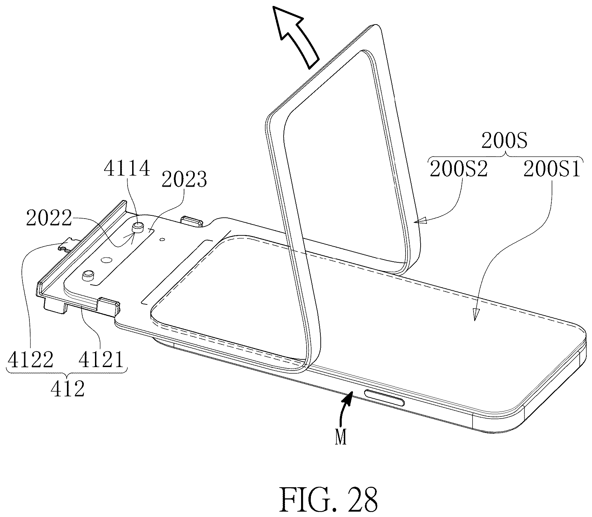

FIG. 28 is a schematic view showing a subsequent operation of the film applicator of FIG. 27; and
FIG. 29 is a schematic view showing a subsequent operation of the film applicator of FIG. 28.

### DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

### [First Embodiment]

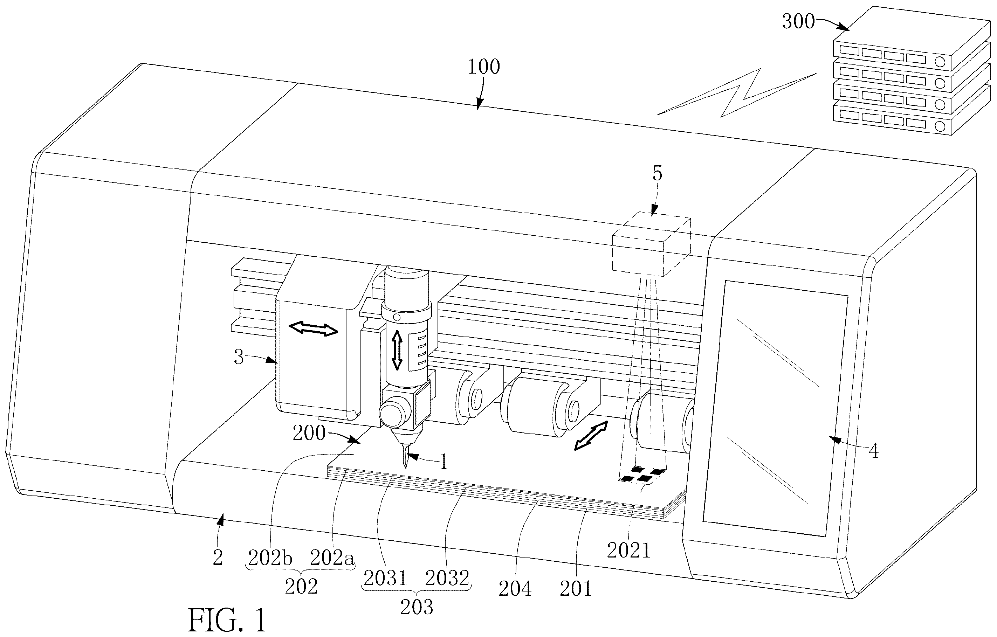

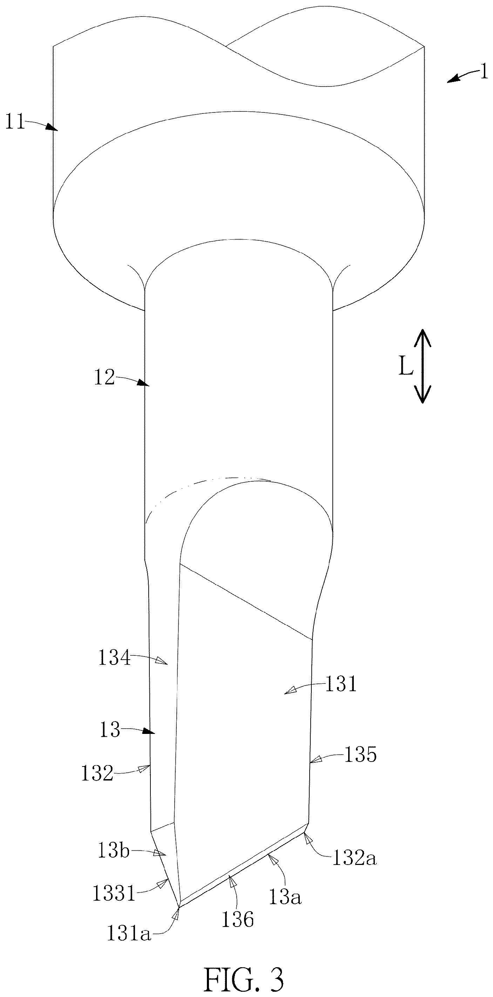

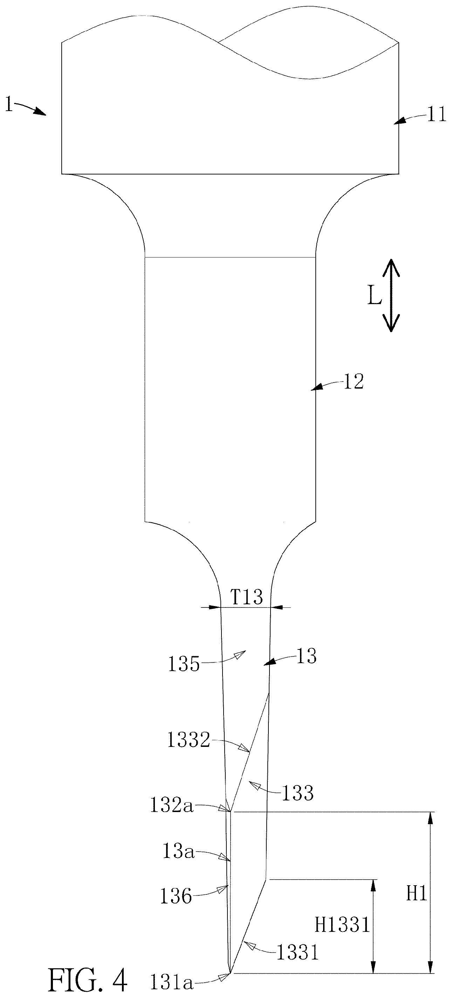

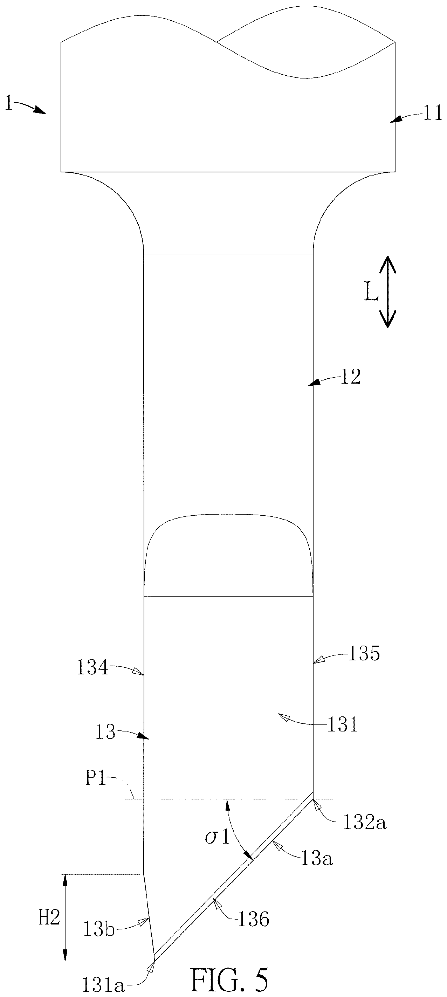

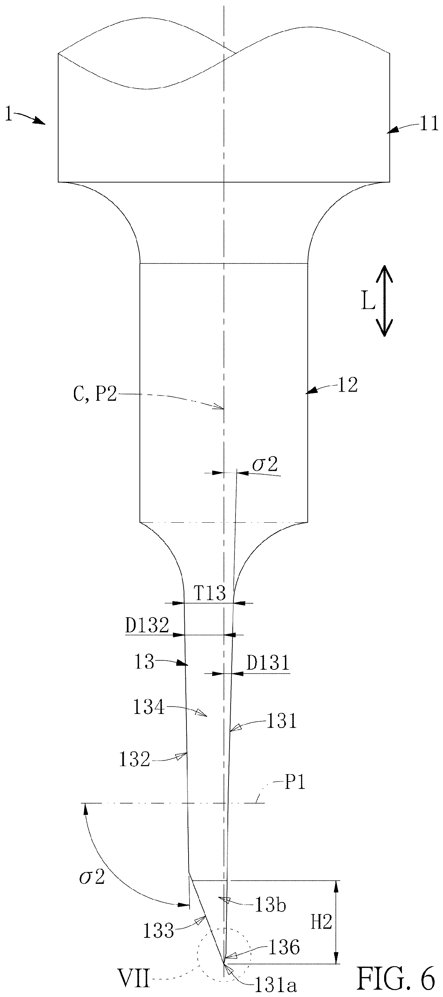

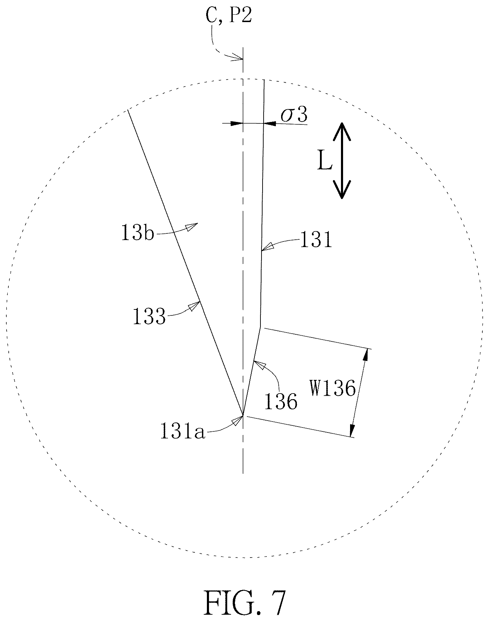

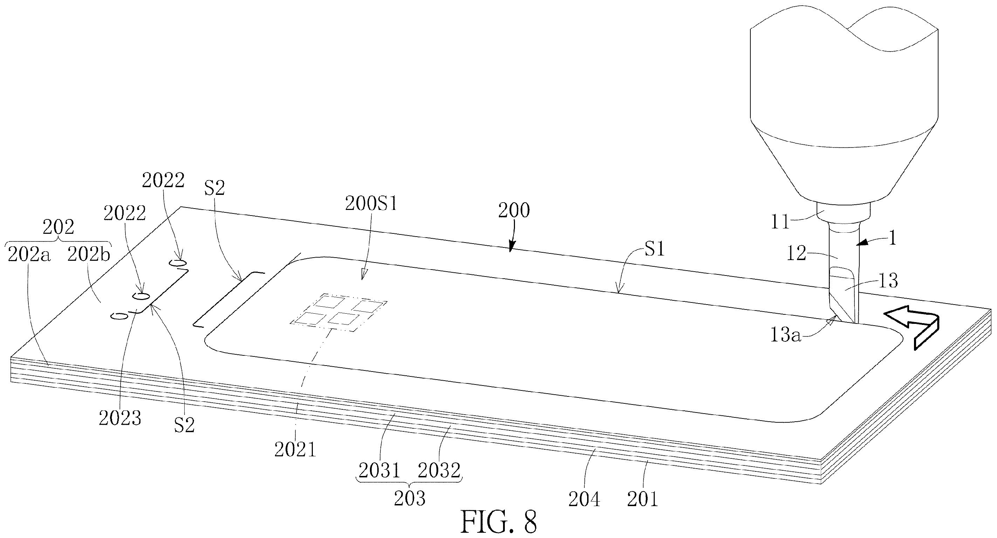

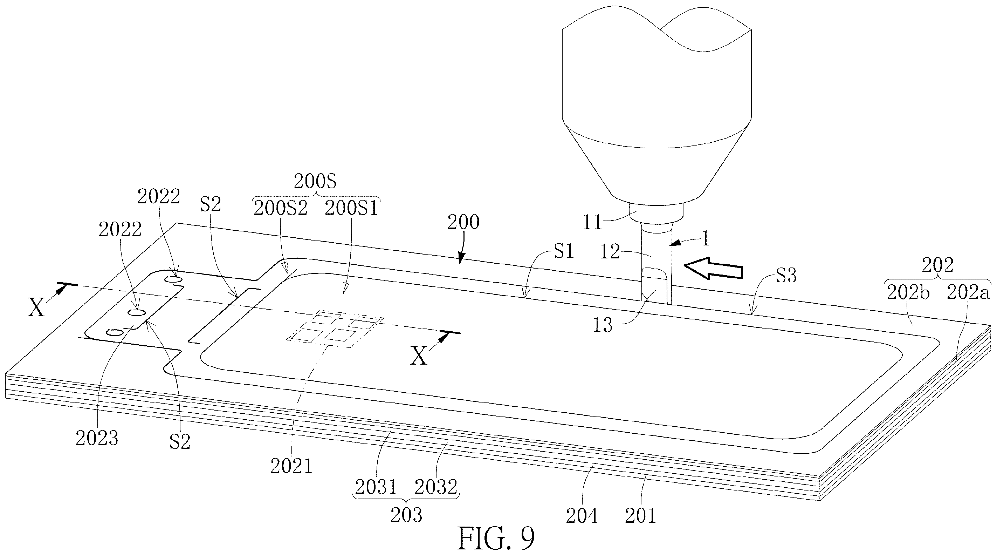

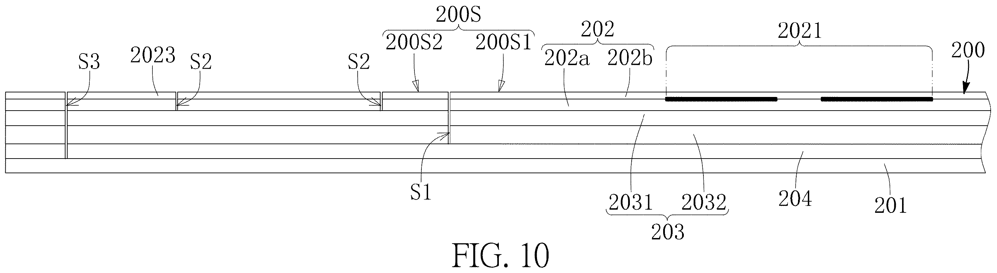

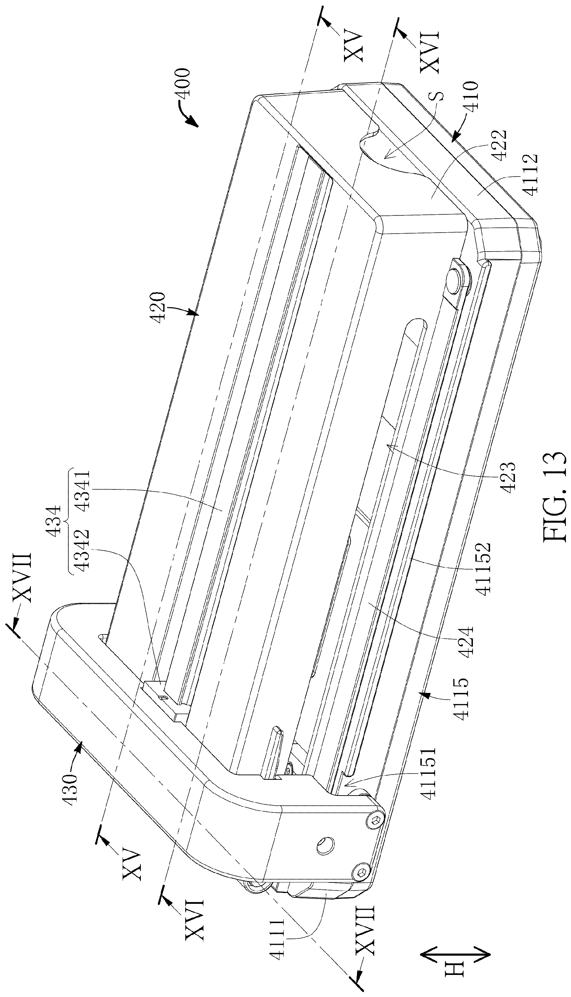

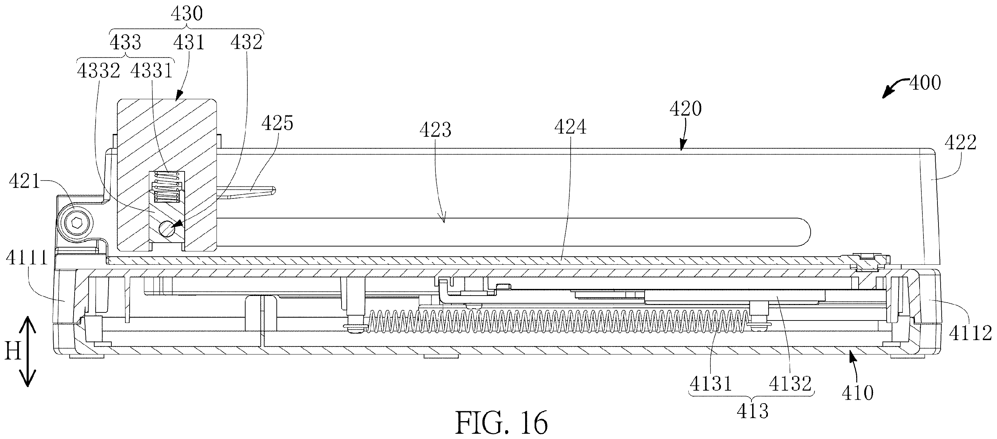

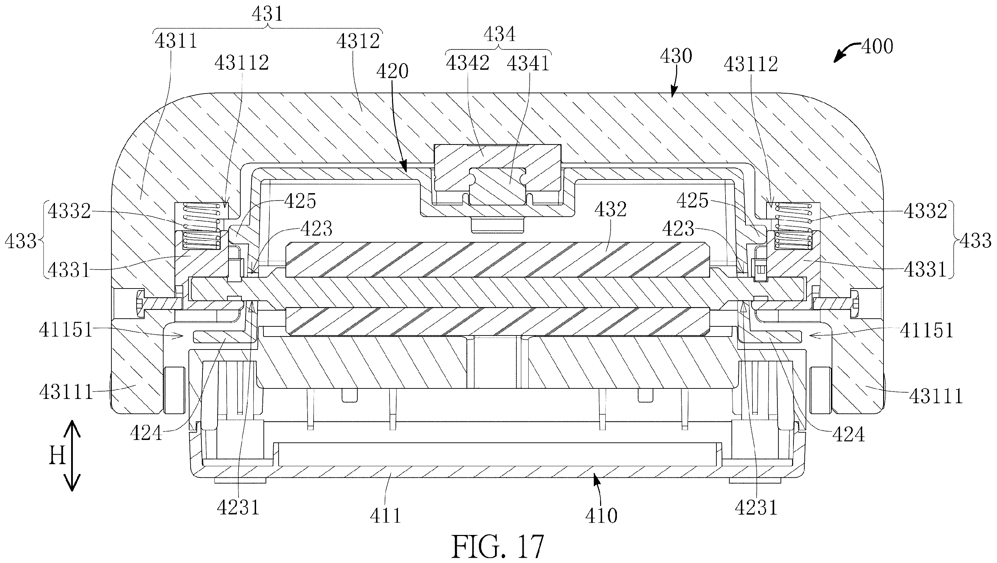

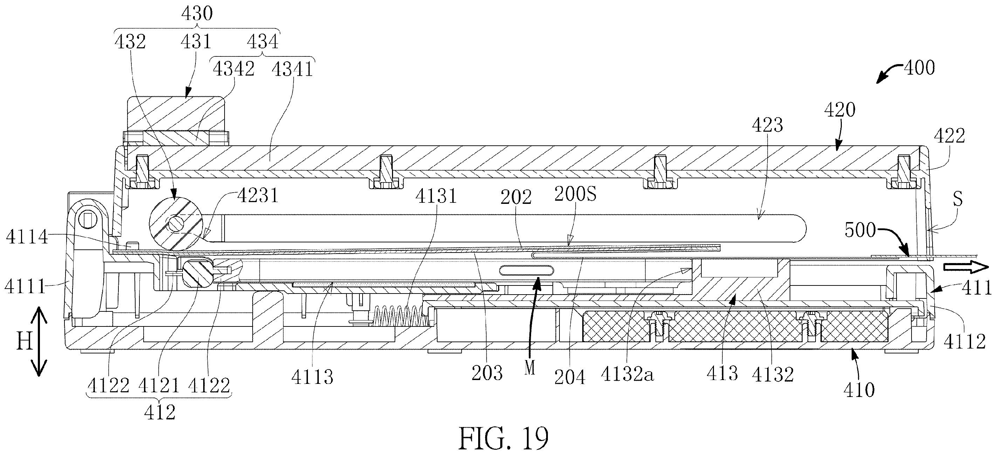

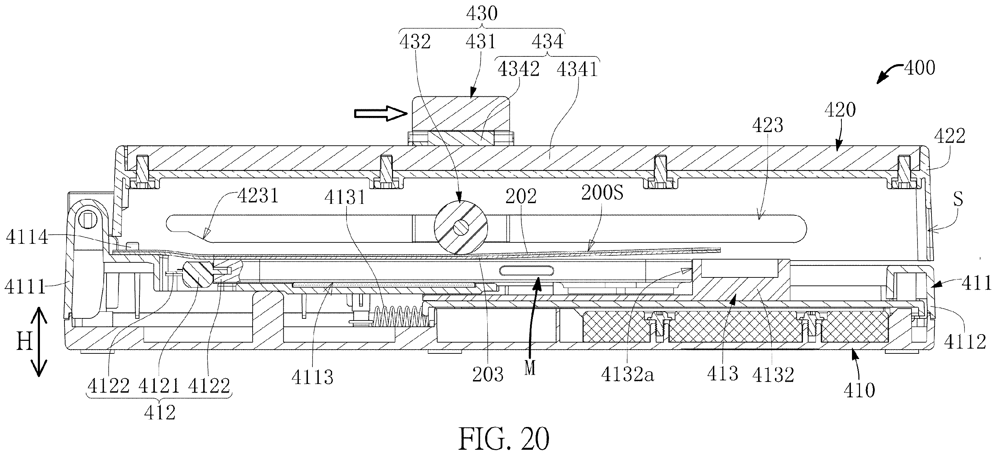

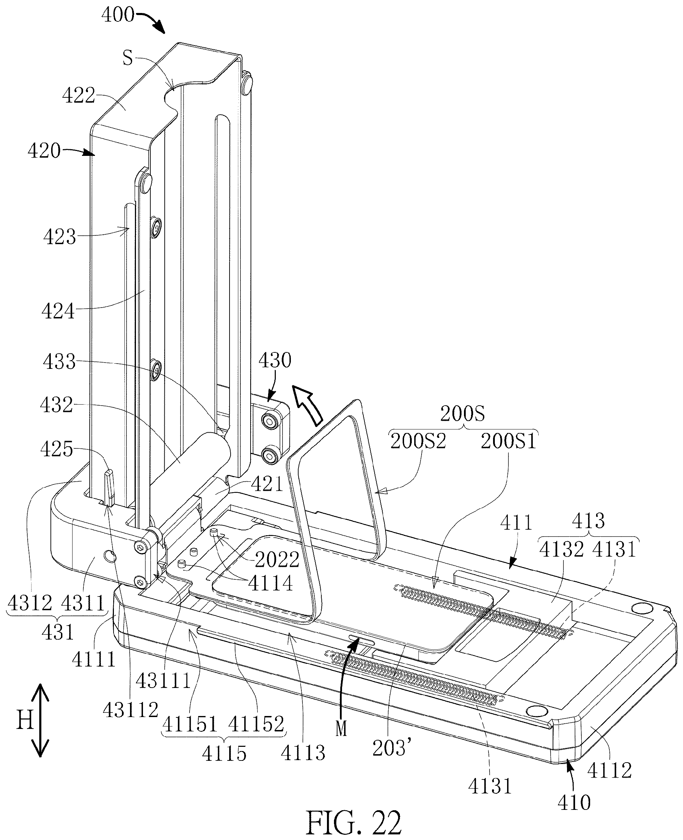

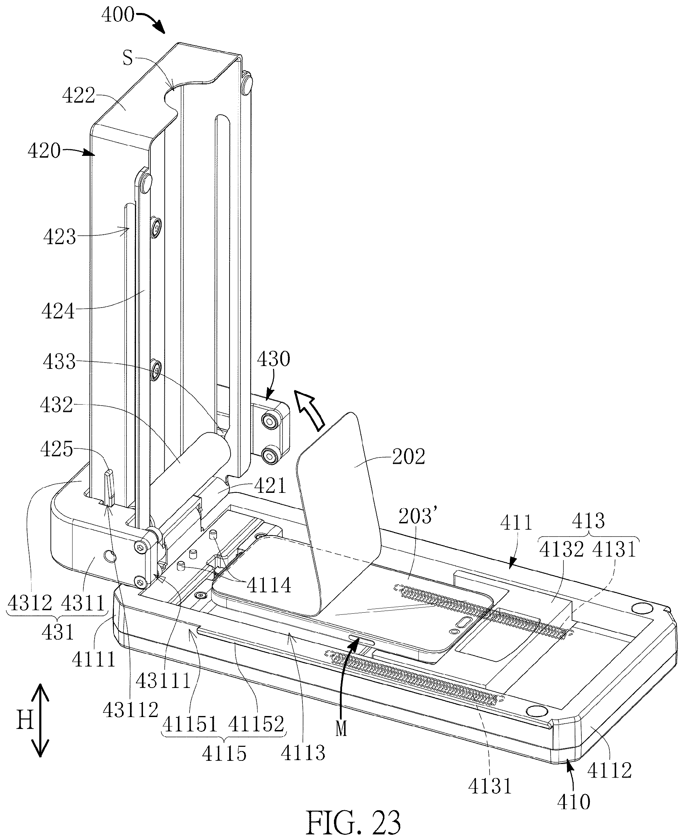

Referring to FIG. 1 to FIG. 23, a first embodiment of the present invention is provided. The present embodiment provides a cutting and attaching system for a screen protector having a high hardness. The cutting and attaching system includes a cutting apparatus 100, a universal sheet 200 being suitable for (or applied to) the cutting apparatus 100, a cloud server 300 being electrically coupled to the cutting apparatus 100, and a film applicator 400 (shown in FIG. 13 to FIG. 23) that is located at a downstream of the cutting apparatus 100, but the present invention is not limited thereto. For example, in other embodiments of the present invention not shown in the drawings, the cutting and attaching system can be provided without the cloud server 300 according to practical requirements.

It should be noted that the cutting and attaching system is preferably provided for manufacturers that need to attach screen protectors onto various mobile apparatuses, and the cutting apparatus 100 can perform a cutting process to the universal sheet 200 so as to form a screen protector 200S that corresponds to a selected type of mobile apparatus, thereby providing a customized function for cutting film. In other words, any cutting apparatus not having a customized function is different from the cutting and attaching system provided by the present embodiment. In addition, the mobile apparatus of the present embodiment is a mobile phone, but in other embodiments of the present invention not shown in the drawings, the mobile apparatus can be different according to practical requirements (e.g., a tablet, a watch, or a camera).

Moreover, the universal sheet 200 in the present embodiment includes a usage layer 203, a buffer layer 202 attached onto one side of the usage layer 203, a release layer 204 attached onto another side of the usage layer 203, and a bottom layer 201 that is attached onto the release layer 204. The usage layer 203 includes a hardened film 2031 and a bonding film 2032 that is opposite to the hardened film 2031. The release layer 204 is attached onto the bonding film 2032 of the usage layer 203, and the buffer layer 202 is attached onto the hardened film 2031 of the usage layer 203. Furthermore, in order to enable the universal sheet 200 to not produce burrs and to have a smooth periphery that is not scratchy after being cut, the universal sheet 200 is preferably provided with at least part of following features, but the present invention is not limited thereto. The bonding film 2032 is formed on the hardened film 2031, and a hardness of the hardened film 2031 is at least 5H. The buffer layer 202 includes a first buffer film 202a attached onto the hardened film 2031 and a second buffer film 202b that is attached onto the first buffer film 202a. In addition, the bottom layer 201 can be a cut-proof board, but the present invention is not limited thereto.

Moreover, a hardness of the hardened film 2031, a hardness of the first buffer film 202a, and a hardness of the second buffer film 202b sequentially decrease, and a thickness of the hardened film 2031, a thickness of the first buffer film 202a, and a thickness of the second buffer film 202b sequentially decrease.

In the present embodiment, the buffer layer 202 is made of a soft material, the thickness of the buffer layer 202 can be within a range from 70 µm to 250 µm, the thickness of the hardened film 2031 can be within a range from 70 µm to 250 µm, the bonding film 2032 can be a high-sticky AB glue, the thickness of the bonding film 2032 can be within a range from 75 µm to 400 µm, and a thickness of the release layer 204 can be within a range from 50 µm to 250 µm.

In addition, the universal sheet 200 of the present embodiment has a printed pattern 2021 that can be an identification code (e.g., a QR code) and that can be formed between the first buffer film 202a and the second buffer film 202b of the buffer layer 202. In other words, the printed pattern 2021 can be directly printed on the first buffer film 202a or the second buffer film 202b of the buffer layer 202, but the present invention is not limited thereto. For example, in other embodiments of the present invention not shown in the drawings, a quantity of layers of the buffer layer 202 can be adjusted or changed according to practical requirements (e.g., the quantity of layers of the buffer layer 202 can be just one or more than two).

Specifically, a hardness (e.g., a pencil hardness) of the universal sheet 200 (or the hardened film 2031) is limited to having at least 5H, and an area of the universal sheet 200 is greater than an area of a screen of any mobile apparatus on the market. Accordingly, any cutting apparatus intended only for cutting soft sheets is different from the cutting and attaching system provided by the present embodiment.

Moreover, the material of the universal sheet 200 can be adjusted or changed according to practical requirements. For example, the universal sheet 200 can be a flexible screen protector, or can be made of polyethylene terephthalate (PET), recycled polyethylene terephthalate (RPET), or polymethyl methacrylate (PMMA), but the present invention is not limited thereto.

In the present embodiment, through the cooperation of a cutter 1 of the cutting apparatus 100 and the universal sheet 200, the cutting apparatus 100 can cut the universal sheet 200 having the hardness of 7H to 9H, and the bonding film 2032 can be prevented from generating burrs and can be formed with a smooth periphery that is not scratchy after being cut. Accordingly, the following description describes the cutter 1, and then describes other components of the cutting apparatus 100.

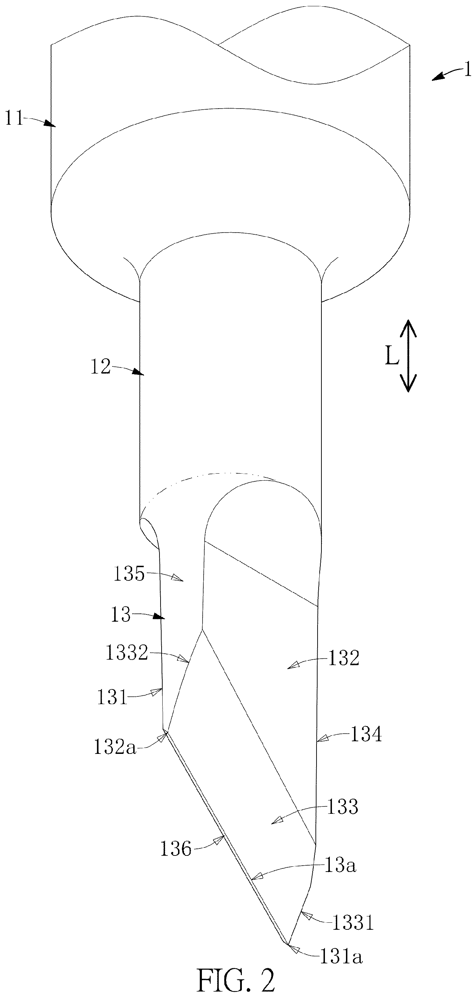

As shown in FIG. 2 to FIG. 7, the cutter 1 defines a transversal reference plane P1 perpendicular to a longitudinal direction L thereof and a longitudinal plane P2 that is perpendicular to the transversal reference plane P1. In the present embodiment, the cutter 1 includes an assembling segment 11, a supporting segment 12 connected to the assembling segment 11, and a cutting segment 13 that is connected to the supporting segment 12. The cutting segment 13 is integrally connected to the supporting segment 12, and the supporting segment 12 is soldered onto the assembling segment 11. In other words, a structure of the cutter 1 is formed by connecting two pieces, and the structure of the cutter 1 is preferably not a single one-piece structure.

In other words, the assembling segment 11 and the cutting segment 13 are respectively connected to two opposite ends of the supporting segment 12, and the supporting segment 12 is connected to a substantial center of and an end surface of the assembling segment 11, and the cutting segment 13 has an offset relative to an end surface of the supporting segment 12, but the present invention is not limited thereto.

The cutting segment 13 (e.g., an outer surface of the cutting segment 134) has a first lateral surface 131, a second lateral surface 132 spaced apart from the first lateral surface 131, a secondary bevel 136 connected to the first lateral surface 131, and a primary bevel 133 that is connected to the second lateral 132 and the secondary bevel 136. Each of the first lateral 131, the second lateral surface 132, and the primary bevel 133 is flat and planar, and a connection edge of the primary bevel 133 and the secondary bevel 136 is defined as a primary cutting edge 13a that is arranged on the longitudinal reference plane P2. The secondary bevel 136 has an elongated shape being parallel to the primary cutting edge 13a.

The first lateral surface 131 and the longitudinal reference plane P2 have a slanting angle σ3 therebetween that is within a range from 1 degree to 3 degrees, and the primary cutting edge 13a and the transversal reference plane P1 have a first angle σ1 therebetween that is within a range from 43 degrees to 47 degrees. The primary cutting edge 13a has a first height H1 along the longitudinal direction L, and the first height H1 is within a range from 0.98 mm to 1.08 mm. In addition, a width W136 of the secondary bevel 136 is within a range from 0.01 mm to 0.03 mm, and an area of the primary bevel 133 is at least 5 times an area of the secondary bevel 136.

Accordingly, the cutter 1 is provided with the cutting segment 13 having specific conditions to facilitate cutting of the universal sheet 200. In order to enable the cutter 1 to easily cut the universal sheet 200, the cutter 1 preferably has at least part of the following features, but the present invention is not limited thereto.

Specifically, the supporting segment 12 defines a central axis C parallel to the longitudinal direction L, and the central axis C in the present embodiment is arranged on the longitudinal reference plane P2, but the present invention is not limited thereto. Furthermore, a distance D131 between the first lateral surface 131 and the central axis L is less than a distance D132 between the second lateral surface 132 and the central axis L. The second lateral surface 132 and the transversal reference plane P1 have a second angle σ2 therebetween that is within a range from 91 degrees to 91.5 degrees.

Moreover, the primary cutting edge 13a has a tip 131a arranged away from the supporting segment 12 and a top end 132a that is arranged adjacent to the supporting segment 12, and the primary bevel 133 has a bottom side 1331 connected to the tip 131a and a top side 1332 that is connected to the top end 132a. The bottom side 1331 of the primary bevel 133 has a height H1331 along the longitudinal direction L, and the height H1331 is within a range from 0.73 mm to 0.77 mm.

The cutting segment 13 has a first end surface 134 and a second end surface 135 that is spaced apart from the first end surface 134. The first end surface 134 is connected to the first lateral surface 131, the second lateral surface 132, and the bottom side 1331 of the primary bevel 133 so as to jointly form (or define) the tip 131a. The second end surface 135 is connected to the first lateral surface 131, the second lateral surface 132, and the top side 1332 of the primary bevel 133 so as to jointly form (or define) the top end 132a.

The first lateral surface 131, the first end surface 134, the second lateral surface 132, and the second end surface 135 are connected to jointly form a loop shape and are jointly defined as a surrounding surface of the cutting segment 13. The first lateral surface 131 and the second lateral surface 132 are spaced apart from each other by a blade thickness T13 that has a same value in a direction from the first end surface 134 to the second end surface 135, but the present invention is not limited thereto. In other words, in other embodiments of the present invention not shown in the drawings, the blade thickness T13 can gradually increase from the tip 131a to the top end 132a, thereby effectively supporting the primary cutting edge 13a. Specifically, the blade thickness T13 is preferably within a range from 0.26 mm to 0.31 mm, but the present invention is not limited thereto.

The first end surface 134 has a secondary cutting edge 13b that extends from the tip 131a and that has a second height H2 along the longitudinal direction L, and the second height H2 is within a range from 4 µm to 6 µm. Accordingly, the primary cutting edge 13a and the secondary cutting edge 13b of the cutter 1 are cooperated with each other through the above specific conditions thereof, thereby facilitating the cutting of the universal sheet 200, effectively preventing the bonding film 2032 of the universal sheet 200 from generating burrs, and enabling the universal sheet 200 to have a smooth periphery that is not scratchy after being cut.

It should be noted that the supporting segment 12 and the cutting segment 13 of the cutter 1 are preferably made of tungsten steel or tungsten powder metallurgy high-speed steel, an outer surface of the cutting segment 13 can be further formed with a diamond like carbon (DLC) coating layer that is an amorphous coating film composed of carbon and hydrogen and that combines the high hardness of diamond and the lubricity of graphite, and the DLC coating layer is preferably formed in a PVD manner or a PACVD manner, but the present invention is not limited thereto. For example, the cutter 1 can be made of other materials, or the outer surface of the cutter 1 can have other hardening treatments. Moreover, the supporting segment 12 and the cutting segment 13 in the present embodiment can be made of a non-magnetizable material, and the assembling segment 11 can be made of a magnetizable material.

As shown in FIG. 1 and FIG. 8 to FIG. 10, the structure of the cutter 1 is described in the above description, and the following description describes other components of the cutting apparatus 100. The cutting apparatus 100 includes a carrying machine 2, a displacement mechanism 3, a processing module 4, and a scanner 5. The carrying machine 2, the displacement mechanism 3, the processing module 4, and the scanner 5 are assembled to the carrying machine 2, and the displacement mechanism 3 and the scanner 5 are electrically coupled to the processing module 4.

Moreover, the displacement mechanism 3 is movable relative to the carrying machine 2, and the processing module 4 is configured to move the displacement mechanism 3 along a first cutting path, a second cutting path, and a third cutting path, which are different from each other by being electrically coupled to the displacement mechanism 3. The cutter 1 is assembled to the displacement mechanism 3 through the assembling segment 11, and the cutting segment 13 is exposed from the displacement mechanism 3, such that the cutter 1 and the displacement mechanism 3 can be moved synchronously. In the present embodiment, the assembling segment 11 is made of a magnetizable material and can be fixed to the displacement mechanism 3 in a magnetic attraction manner, such that when the cutter 1 and the displacement mechanism 3 are moved, the displacement mechanism 3 can be operated to rotate the assembling segment 11 by changing a magnetism relative to the assembling segment 11. Moreover, the displacement mechanism 3 is configured to move the cutting segment 13 between an upper position and a lower position that is lower than the upper position. In other words, the cutter 1 and the displacement mechanism 3 of the present embodiment are in cooperation with each other for enabling the cutter 1 to be automatically movable along the longitudinal direction L.

In addition, the cloud server 300 is electrically coupled to the processing module 4 and the scanner 5. When the universal sheet 200 is fixed onto the carrying machine 2, the scanner 5 is configured to scan the printed pattern 2021 to generate a signal, such that the cloud server 300 is configured to receive the signal through the processing module 4 for allowing the cutting apparatus 100 to perform the cutting process by choosing a corresponding pattern file and for enabling the cutting apparatus 100 to identify a material of the universal sheet 200.

It should be noted that the processing module 4 in the present embodiment further includes a touch panel for providing a user to input a type of the mobile apparatus that is required to be attached with a screen protector. Accordingly, the cutting apparatus 100 can perform the cutting process that corresponds to the type of the mobile apparatus that is inputted into the processing module 4 by the user (e.g., the screen cutting path corresponding to a contour of a screen of the mobile apparatus), but the present invention is not limited thereto. For example, in other embodiments of the present invention not shown in the drawings, the processing module 4 can obtain the type of the mobile apparatus by receiving a signal from an external apparatus (e.g., a computer or a user's mobile phone) in other manners.

When the universal sheet 200 is placed on the cutting apparatus 100 under the cutting process for forming the screen protector 200S, the bottom layer 201 of the universal sheet 200 is fixed to the carrying machine 2, the displacement mechanism 3 is driven by the processing module 4 to enable the cutting segment 13 (e.g., the primary cutting edge 13a) of the cutter 1 at the upper position to cut the buffer layer 202along the first cutting path for forming a positioning contour S2, and then to cut the buffer layer 202 and the usage layer 203 along the second cutting path for forming a screen contour S1.

Furthermore, after the positioning contour S2 and the screen contour S1 are formed in the universal sheet 200, the displacement mechanism 3 can be driven by the processing module 4 to enable the cutting segment 13 of the cutter 1 at the lower position to cut the buffer layer 202, the usage layer 203, and the release layer 204 along the third cutting path for forming a peripheral contour S3 that surrounds the positioning contour S2 and the screen contour S1. Moreover, a portion of the buffer layer 202, a portion of the usage layer 203, and a portion of the release layer 204 are arranged outside of the peripheral contour S3 and are useless and removed.

Specifically, the cutting apparatus 100 is configured to cut the universal sheet 200 from the buffer layer 202 and does not cut the universal sheet 200 from the bonding film 2032 of the usage layer 203, such that damage to an adhesive side of the bonding film 2032 can be effectively avoided, burrs can be prevented from being forming on the usage layer 203, and the screen contour S1 can have a smooth periphery that is not scratchy after being cut.

It should be noted that the displacement mechanism 3 can drive the cutter 1 to move relative to the universal sheet 200 along an X axial direction, a Y axial direction, and a Z axial direction, which are perpendicular to each other, and a moved object (e.g., the cutter 1 or the universal sheet 200) can be adjusted or changed according to practical requirements. For example, the cutter 1 can be moved along the X axial direction and the Z axial direction by the displacement mechanism 3, and the universal sheet 200 can be moved along the Y axial direction by the displacement mechanism 3, such that the cutter 1 can be moved relative to the universal sheet 200 along the hole cutting path and the screen cutting path.

Moreover, after the universal sheet 200 is cut to form the screen protector 200S by performing of the cutting process, the buffer layer 202 and the usage layer 203 jointly define a screen region 200S1 and a positioning region 200S2 that surrounds the screen region 200S1 and that has the positioning holes 2022 and an arrangement tab 2023. In other words, a portion 203' of the usage layer 203 arranged inside of the screen contour S1 is provided for attaching onto a screen of a mobile apparatus M.

As shown in FIG. 13 to FIG. 17, the film applicator 400 includes an accommodating chamber 4113 and a plurality of positioning pillars 4114 that are arranged on two opposite sides of the accommodating chamber 4113. The accommodating chamber 4113 is configured to hold the mobile apparatus M. Moreover, a relative position of the positioning pillars 4114 is identical to a relative position of the positioning holes 2022 of the positioning contour S2, and a relative position between the positioning pillars 4114 and the screen of the mobile apparatus M is identical to a relative position between the positioning holes 2022 and the screen contour S1 (or edges of the screen region 200S1). The relative position of the positioning pillars 4114 of the film applicator 400 preferably has a fixed position and cannot be changed, but the present invention is not limited thereto.

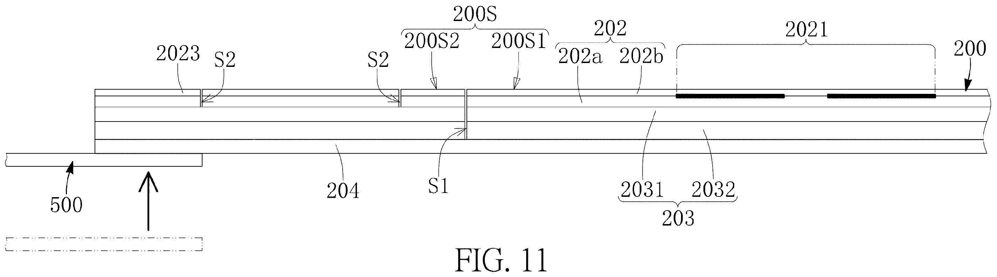

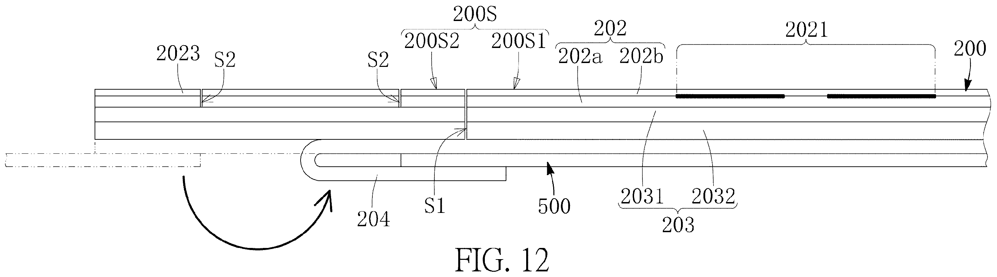

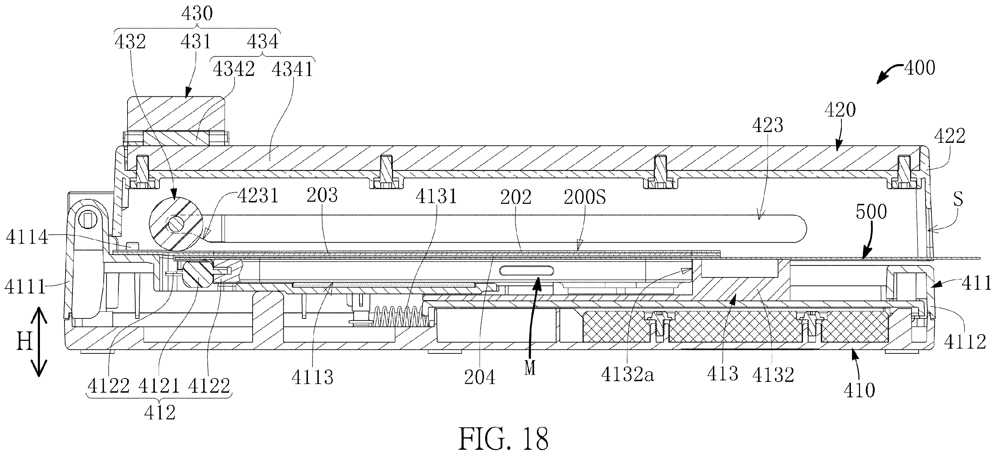

Accordingly, as shown in FIG. 18 to FIG. 23, when the accommodating chamber 4113 of the film applicator 400 holds the mobile apparatus M, a pull strip 500 of the cutting and attaching system is adhered to a portion of the release layer 204 corresponding in position to the arrangement tab 2023 and is folded to be stacked on the release layer 204 (as shown in FIG. 11 and FIG. 12), and the positioning holes 2022 of the positioning region 200S2 are respectively sleeved at the positioning pillars 4114 to place the pull strip 500 between the release layer 204 and the screen of the mobile apparatus M, so that the pull strip 500 is configured to be pulled out of the accommodating chamber 4113 to remove the release layer 204 from the bonding film 2023 for enabling the release layer 204 to remove particles on the screen of the mobile apparatus M through electrostatic adsorption. After that, the screen region 200S1 (e.g., the portion 203' of the usage layer 203) faces toward the screen of the mobile apparatus M for allowing the screen region 200S1 to be pressed and attached onto the screen of the mobile apparatus M.

Specifically, as shown in FIG. 13 to FIG. 17, the film applicator 400 of the present embodiment can provide a precise attaching effect and is described as follows. The film applicator 400 includes a carrying seat 410, a dust-proof shield 420 that is pivotally connected to the carrying seat 410, and a rolling mechanism 430 that is assembled to the carrying seat 410 and that is linked to the dust-proof shield 420.

The carrying seat 410 in the present embodiment includes a holder 411, a localizer 412 that is assembled to the holder 411, and a clamping mechanism 413 that is movably assembled to the holder 411, but the present invention is not limited thereto. For example, in other embodiments of the present invention not shown in the drawings, a structure of the carrying seat 410 can be simplified according to practical requirements (e.g., the carrying seat 410 being provided without the localizer 412 and the clamping mechanism 413).

The holder 411 has an accommodating chamber 4113 for allowing the mobile apparatus M to be positioned therein. The holder 411 is substantially rectangular in shape and has a first end portion 4111 and a second end portion 4112 that is opposite to the first end portion 4111. In addition, the accommodating chamber 4113 is substantially located between the first end portion 4111 and the second end portion 4112. The holder 411 includes a plurality of positioning columns 4114 that are assembled to the first end portion 4111 and that have different shapes.

Moreover, the holder 411 in the present embodiment is preferably formed with two bracket tracks 4115 respectively arranged on two outer sides thereof. Each of the two bracket tracks 4115 is formed by extending from the first end portion 4111 toward the second end portion 4112, and has an upper notch 41151 arranged adjacent to the first end portion 4111. In other words, each of the two bracket tracks 4115 in the present embodiment is a rib 41152 that is formed with the upper notch 41151, but the present invention is not limited thereto.

The localizer 412 in the present embodiment is pivotally connected to the holder 411 (i.e., the localizer 412 cannot be disassembled and separated from the holder 411) for detachably inserting into a charging port of the mobile apparatus M, but the present invention is not limited thereto. For example, in other embodiments of the present invention not shown in the drawings, the localizer 412 can be detachably assembled to the holder 411 according to practical requirements.

Moreover, the localizer 412 is arranged in the accommodating chamber 4113 and is adjacent to the first end portion 4111. In addition, the localizer 412 has a rotation shaft 4121 and two plugs 4122 that are respectively connected to two opposite sides of the rotation shaft 4121. Furthermore, the rotation shaft 4121 is pivotally connected to the holder 411, so that the localizer 412 is rotatable by at least 180° relative to the holder 411. The two plugs 4122 has different shapes (and are rotatable through the rotation shaft 4121) for being respectively assembled to different types of the charging port. It should be noted that each of the two plugs 4122 and the corresponding charging port in the present embodiment are not electrically coupled to each other.

The clamping mechanism 413 is adjacent to the second end portion 4112 and has an elastic member 4131 assembled to the holder 411 and an abutting seat 4132 that is arranged in the accommodating chamber 4113 and that is connected to the elastic member 4131. Moreover, the abutting seat 4132 is configured to tend to move toward the first end portion 4111 through an elasticity of the elastic member 4131, and the abutting seat 4132 includes a flat edge 4132a and two lateral walls 4132b. The flat edge 4132a is configured for abutting an end of the mobile apparatus M arranged away from the charging port. The two lateral walls 4132b are perpendicularly connected to two ends of the flat edge 4132a, respectively, and are not moved relative to the flat edge 4132a.

Specifically, when the charging port of the mobile apparatus M is inserted into by a corresponding one of the two plugs 4122 of the localizer 412 and is located in the accommodating chamber 4113, the end of the mobile apparatus M away from the charging port is pressed by the flat edge 4132a and are free contacting from the two lateral walls 4132b that are provided for respectively positioning (or abutting against) two sides of the screen protector 200S.

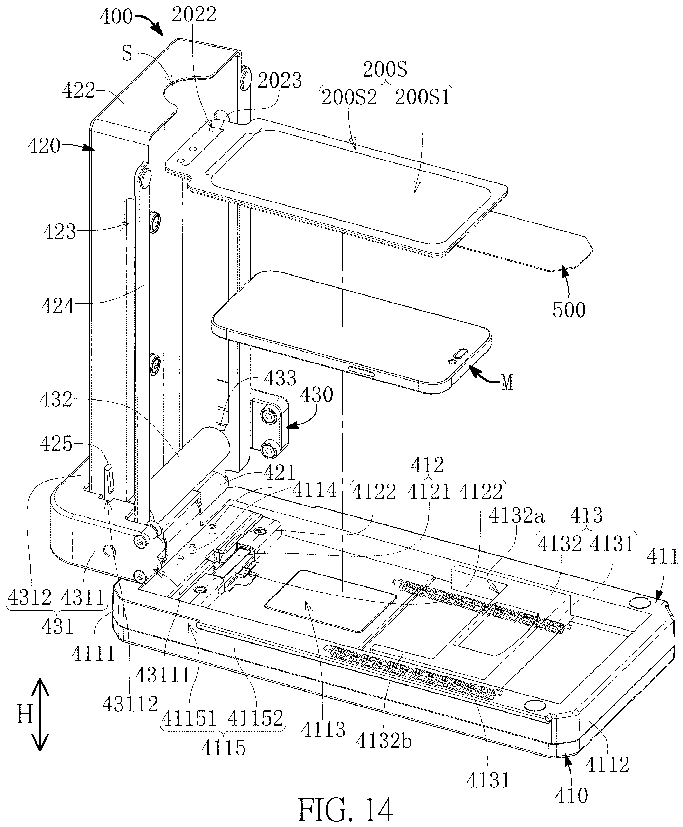

The dust-proof shield 420 is pivotally connected to the first end portion 4111 of the holder 411, so that the dust-proof shield 420 is rotatable relative to the holder 411 between a closed position (e.g., FIG. 13 and FIG. 15 to FIG. 21) and an open position (e.g., FIG. 14, FIG. 22, and FIG. 23). To facilitate the description of the dust-proof shield 420, the following description describes the structure of the dust-proof shield 420 at the closed position.

Specifically, as shown in FIG. 14 to FIG. 17, the dust-proof shield 420 substantially abuts against a periphery of the holder 411, and the dust-proof shield 420 has a pivotal end 421 pivotally connected to the first end portion 4111 and a cover end 422 that is opposite to the pivotal end 421. In addition, the cover end 422 of the dust-proof shield 420 and the second end portion 4112 of the holder 411 are formed with a pullout opening S therebetween for allowing the pull strip 500 to pass therethrough.

The dust-proof shield 420 includes two roller tracks 423, two lateral beams 424, and two protrusions 425. The two roller tracks 423 are respectively arranged on two opposite sides of the dust-proof shield 420. The two lateral beams 424 are respectively arranged at outer sides of the two roller tracks 423, and the two protrusions 425 are respectively arranged above the two roller tracks 423 and are adjacent to the pivot end 421. In other words, any one of side edges of the dust-proof shield 420 is sequentially formed along a height direction H from top to bottom with one of the protrusions 425, one of the two roller tracks 423, and one of the two lateral beams 424. Furthermore, each of the two roller tracks 423 in the present embodiment is a loop-shaped inner wall defining an elongated thru-hole and has a climbing segment 4231 arranged adjacent to the pivotal end 421 (or the first end portion 4111).

The rolling mechanism 430 in the present embodiment includes an operation bracket 431, a linear guideway 434 that is assembled between the dust-proof shield 420 and the operation bracket 431, a roller 432 that is assembled to the operation bracket 431, and two buffers 433 that are assembled in the operation bracket 431. Moreover, the operation bracket 431 is an approximately U-shaped. The roller 432 is substantially located within a space that is surroundingly defined by the operation bracket 431. Two ends of the roller 432 respectively pass through the two roller tracks 423 so as to be respectively assembled to the two buffers 433, and the roller 432 is liftable along the height direction H.

The linear guideway 434 has a straight track 4341 that is fixed on the dust-proof shield 420 and a slider 4342 that is slidably assembled to the straight track 4341. In the present embodiment, the straight track 4341 is arranged on a center of the dust-proof shield 420, and two ends of the straight track 4341 are respectively arranged on the pivotal end 421 and the cover end 422 of the dust-proof shield 420. In other words, the two ends of the straight track 4341 respectively correspond in position to the first end portion 4111 and the second end portion 4112 along the height direction H.

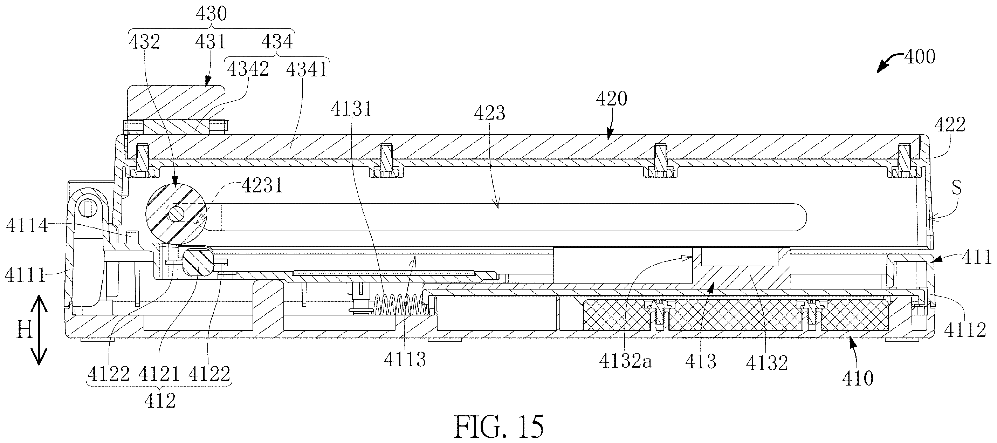

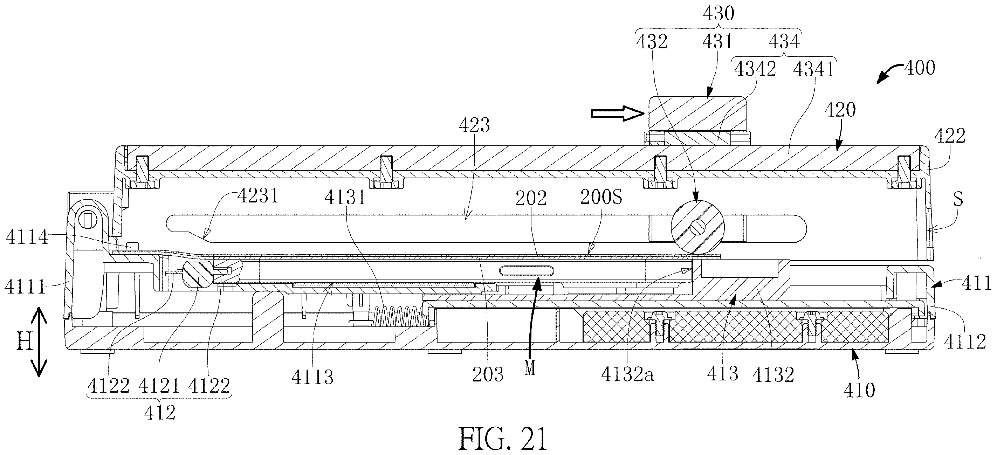

The operation bracket 431 is detachably assembled to the holder 411 and is fixed to the slider 4342. Through the slider 4342, the operation bracket 431 is movable relative to the holder 411 (or the carrying seat 41) along the straight track 4341 from a first position (e.g., FIG. 15 to FIG. 19) that is adjacent to the first end portion 4111 (or the pivotal end 421) to a second position (e.g., FIG. 21) that is adjacent to the second end portion 4112 (or the cover end 422). In other words, through the linear guideway 434, the operation bracket 431 is stably movable from the first position that is adjacent to the pivotal end 421 to the second position that is adjacent to the cover end 422 relative to the dust-proof shield 420 that is positioned in the closed position. Accordingly, an operation of the operation bracket 431 is not easily affected by a manner of operation of different operators.

In the present embodiment, the operation bracket 431 has two arms 4311 that are substantially parallel to each other and a beam 4312 that connects the two arms 4311. Ends 43111 of the two arms 4311 are rollingly assembled to the two bracket tracks 4115, respectively, so that the operation bracket 431 straddles the holder 411 and the dust-proof shield 420 (e.g., the beam 4312 being located above the carrying seat 410 and the dust-proof shield 420, and the two arms 4311 being located at outer sides of the carrying seat 410 and the dust-proof shield 420).

Moreover, the operation bracket 431 has two engaging grooves 43112 that respectively correspond in position to the two protrusions 425. When the dust-proof shield 420 is located at the closed position and the operation bracket 431 is located at the first position, the two protrusions 425 are respectively inserted into the two engaging grooves 43112, such that the dust-proof shield 420 is configured to drive the rolling mechanism 430 to rotate simultaneously. Furthermore, when the operation bracket 431 is at the first position and the dust-proof shield 420 rotates toward the open position, the ends of 43111 of the two arms 4311 of the operation bracket 431 are separated from the holder 411 by respectively passing through the upper notches 41151 of the two bracket tracks 4115.

The roller 432 is arranged in the dust-proof shield 420 relative to the accommodating chamber 4113 of the holder 411. Furthermore, when the operation bracket 431 is located at the first position, the roller 432 is located between the localizer 412 and the two first positioning columns 4114. In other words, when the operation bracket 431 is located at the first position, the dust-proof shield 420 is rotatable toward the open position and drives the rolling mechanism 430 to rotate simultaneously, so that the operation bracket 431 and the roller 432 are separated from the holder 411.

Furthermore, each of the two buffers 433 has an abutting block 4331 and a spring 4332 that is connected to the abutting block 4331 and that abuts against the operation bracket 431. In addition, the abutting blocks 4331 of the two buffers 433 are respectively arranged above the two lateral beams 424, and the two ends of the roller 432 are respectively assembled to the abutting block 4331 of the two buffers 433 and are respectively movable along the two roller tracks 423, so that the roller 432 is liftable along the height direction H by using each the abutting block 4331 to press the corresponding spring 4332 and by using the two ends of the roller 432 to climb the climbing segments 4231. In other words, when the two ends of the roller 432 are moved to climb the climbing segments 4231, the roller 432 lifts to enable each of the abutting blocks 4331 to move away from the corresponding lateral beam 424 and to press the corresponding spring 4332.

When the carrying seat 410 holds the mobile apparatus M therein through the localizer 420 and the screen protector 200S is positioned to the positioning pillars 4114 after the pull strip 500 is pulled out of the accommodating chamber 4113 through the pullout opening S, the operation bracket 431 is movable from the first position to the second position through the linear guideway 434 for enabling the roller 432 to press the screen protector 200S, so as to attach the hardened film 2031 onto the screen of the mobile apparatus M.

### [Second Embodiment]

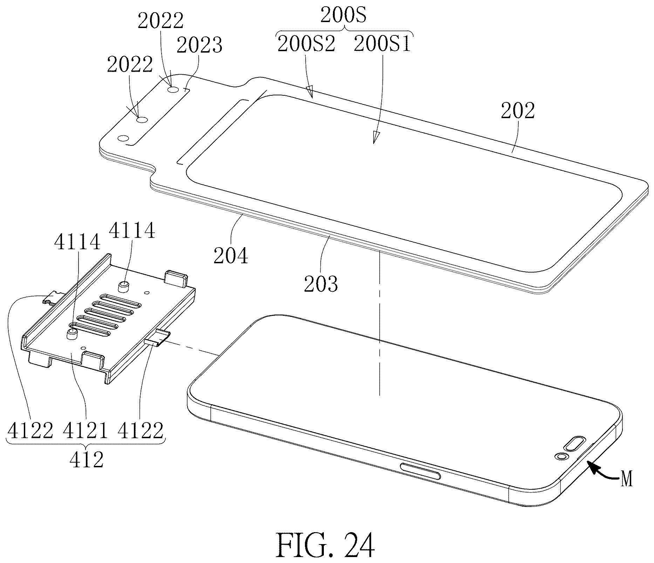

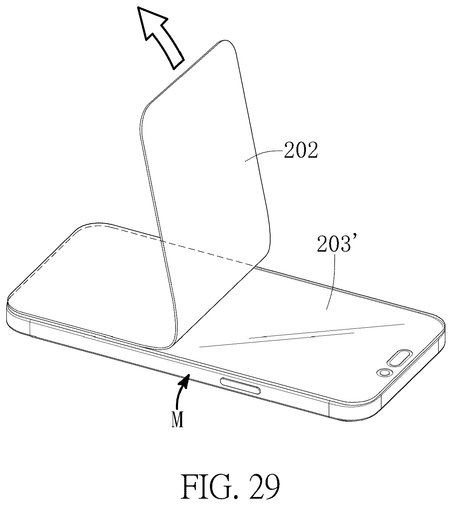

Referring to FIG. 24 and FIG. 29, a second embodiment of the present invention, which is similar to the first embodiment of the present invention, is provided. For the sake of brevity, descriptions of the same components in the first and second embodiments of the present invention will be omitted herein, and the following description only discloses different features between the first and second embodiments.

In the present embodiment, the film applicator 400 only includes a localizer 412 and a plurality of positioning pillars 4114 that are formed on the localizer 412. The localizer 412 is configured to be detachably inserted into the charging port of the mobile apparatus M, and the specific structure of the localizer 412 is substantially identical to that of the present embodiment and is not described again for the sake of brevity.

Moreover, the positioning pillars 4114 have a relative position that is identical to a relative position of the positioning holes 2022 of the positioning contour S2. Furthermore, when the localizer 412 is inserted into the charging port of the mobile apparatus M, a relative position between the positioning pillars 4114 and the screen of the mobile apparatus M is identical to a relative position between the positioning holes 2022 and the screen contour S2.

Accordingly, when the localizer 412 is inserted into the charging port of the mobile apparatus M, the positioning holes 2022 of the positioning region 200S2 are respectively sleeved at the positioning pillars 4114 to place the release layer 204 toward the screen of the mobile apparatus M, and the release layer 204 is configured to be removed from the bonding film 2032 for removing particles on the screen of the mobile apparatus M through electrostatic adsorption.

### [Beneficial Effects of the Embodiments]

In conclusion, the cutting and attaching system in the present invention is operated through the cooperation of the cutting apparatus, the universal sheet, and the film applicator, so that the cutting apparatus can perform the cutting process to the universal sheet having at least 5H hardness according to the film applicator and the mobile apparatus, thereby forming the screen protector that is suitable for being applied to the film applicator and the mobile apparatus and that has no burrs and no scratchy structure. Accordingly, the cutting and attaching system can be used to implement a customized film attaching requirement by cutting the universal sheet until attaching the screen protector onto the mobile apparatus.

The foregoing description of the exemplary embodiments of the invention has been presented only for the purposes of illustration and description and is not intended to be exhaustive or to limit the invention to the precise forms disclosed. Many modifications and variations are possible in light of the above teaching.

## Claims

1. A cutting and attaching system for a screen protector (200S) having a high hardness, **characterized by** comprising:
a cutting apparatus (100) including:
a carrying machine (2);
a displacement mechanism (3) being assembled to the carrying machine (2) and being movable relative to the carrying machine (2);
a processing module (4) assembled to the carrying machine (2), wherein the processing module (4) is electrically coupled to the displacement mechanism (3) and is configured to move the displacement mechanism (3) along a first cutting path and a second cutting path that is different from the first cutting path, and wherein the second cutting path corresponds to a contour of a screen of a mobile apparatus (M); and
a cutter (1) assembled to the displacement mechanism (3) and having a cutting segment (13) exposed from the displacement mechanism (3), wherein the displacement mechanism (3) is configured to move the cutting segment (13) between an upper position and a lower position that is lower than the upper position; and
a universal sheet (200) that is configured to be cut to form the screen protector (200S) through a cutting process of the cutting apparatus (100), wherein the universal sheet (200) includes:
a usage layer (203) including a hardened film (2031) and a bonding film (2032) that is formed on the hardened film (2031), wherein a hardness of the hardened film (2031) is at least 5H;
a buffer layer (202) having a hardness that is less than the hardness of the hardened film (2031);
a release layer (204) attached onto the bonding film (2032); and
a bottom layer (201) attached onto the release layer (204);
wherein, when the universal sheet (200) is placed on the cutting apparatus (100) under the cutting process, the bottom layer (201) of the universal sheet (200) is fixed to the carrying machine (2), the displacement mechanism (3) is driven by the processing module (4) to enable the cutting segment (13) of the cutter (1) at the upper position to cut the buffer layer (202) along the first cutting path for forming a positioning contour (S2), and to cut the buffer layer (202) and the usage layer (203) along the second cutting path for forming a screen contour (S1), such that the buffer layer (202) and the usage layer (203) jointly define a screen region (200S1) and a positioning region (200S2) that is arranged at one side of the screen region (200S1) and that has a plurality of positioning holes (2022) and an arrangement tab (2023); and
a film applicator (400) located at a downstream of the cutting apparatus (100) and including:
an accommodating chamber (4113) configured to hold the mobile apparatus (M); and
a plurality of positioning pillars (4114) having a relative position that is identical to a relative position of the positioning holes (2022) of the positioning contour (S2), wherein a relative position between the positioning pillars (4114) and the screen of the mobile apparatus (M) is identical to a relative position between the positioning holes (2022) and the screen contour (S1);
wherein, when the accommodating chamber (4113) of the film applicator (400) holds the mobile apparatus (M), a pull strip (500) of the cutting and attaching system is adhered to a portion of the release layer (204) corresponding in position to the arrangement tab (2023) and is folded to be stacked on the release layer (204), and the positioning holes (2022) of the positioning region (200S2) are respectively sleeved at the positioning pillars (4114) to place the pull strip (500) between the release layer (204) and the screen of the mobile apparatus (M), so that the pull strip (500) is configured to be pulled out of the accommodating chamber (4113) to remove the release layer (204) from the bonding film (2032) for enabling the release layer (204) to remove particles on the screen through electrostatic adsorption.

2. The cutting and attaching system according to claim 1, wherein, when the universal sheet (200) is placed on the cutting apparatus (100) under the cutting process, the bottom layer (201) of the universal sheet (200) is fixed to the carrying machine (2), the displacement mechanism (3) is driven by the processing module (4) to enable the cutting segment (13) of the cutter (1) at the lower position to cut the buffer layer (202), the usage layer (203), and the release layer (204) along the third cutting path for forming a peripheral contour (S3) that surrounds the positioning contour (S2) and the screen contour (S1), and wherein a portion of the buffer layer (202), a portion of the usage layer (203), and a portion of the release layer (204) are arranged outside of the peripheral contour (S3) and are removed.

3. The cutting and attaching system according to claim 1, wherein the buffer layer (202) includes a first buffer film (202a) attached onto the hardened film (2031) and a second buffer film (202b) that is attached onto the first buffer film (202a), and wherein the hardness of the hardened film (2031), a hardness of the first buffer film (202a), and a hardness of the second buffer film (202b) sequentially decrease.

4. The cutting and attaching system according to claim 3, wherein the universal sheet (200) has a printed pattern (2021) that is formed between the first buffer film (202a) and the second buffer film (202b).

5. The cutting and attaching system according to claim 3, wherein a thickness of the hardened film (2031), a thickness of the first buffer film (202a), and a thickness of the second buffer film (202b) sequentially decrease.

6. The cutting and attaching system according to claim 1, wherein a thickness of the buffer layer (202) is within a range from 70 µm to 250 µm, a thickness of the hardened film (2031) is within a range from 70 µm to 250 µm, and a thickness of the release layer (204) is within a range from 50 µm to 250 µm.

7. The cutting and attaching system according to claim 1, wherein the film applicator (400) includes:
a carrying seat (410) including:
a holder (411) having the accommodating chamber (4113), wherein the holder (411) has a first end portion (4111) and a second end portion (4112) that is opposite to the first end portion (4111); and
a localizer (412) assembled to the holder (411) and arranged adjacent to the first end portion (4111), wherein the localizer (412) is configured to be detachably inserted into a charging port of the mobile apparatus (M);
a dust-proof shield (420) that is pivotally connected to the first end portion (4111) of the holder (411), such that the dust-proof shield (420) is rotatable relative to the holder (411) between an open position and a closed position; and
a rolling mechanism (430) including:
a linear guideway (434) including a straight track (4341) fixed to the dust-proof shield (420) and a slider (4342) that is slidably assembled to the straight track (4341);
an operation bracket (431) movably assembled to the holder (411) and fixed to the slider (4342), wherein the operation bracket (431) is movable along the straight track (4341) from a first position to a second position relative to the holder (411) through the slider (4342); and
a roller (432) assembled to the operation bracket (431) and arranged in the dust-proof shield (420) corresponding in position to the accommodating chamber (4113) of the holder (411), wherein, when the operation bracket (431) is located at the first position, the dust-proof shield (420) is rotatable toward the open position for driving the rolling mechanism (430) to rotate simultaneously so as to separate the operation bracket (431) and the roller (432) from the holder (411).

8. The cutting and attaching system according to claim 7, wherein the localizer (412) is arranged in the accommodating chamber (4113) and includes:
a rotation shaft (4121) pivotally connected to the holder (411), wherein the localizer (412) is rotatable by at least 180° relative to the holder (411); and
two plugs (4122) respectively connected to two opposite sides of the rotation shaft (4121), wherein the two plugs (4122) have different shapes for being assembled to different types of the charging port.

9. The cutting and attaching system according to claim 7, wherein, when the carrying seat (410) holds the mobile apparatus (M) therein through the localizer (412) and the screen protector (200S) is positioned to the positioning pillars (4114) after the pull strip (500) is pulled out of the accommodating chamber (4113), the operation bracket (431) is movable from the first position to the second position through the linear guideway (434) for enabling the roller (432) to press the screen protector (200S), so as to attach the hardened film (2031) onto the screen.

10. The cutting and attaching system according to claim 7, wherein the carrying seat (410) further includes a clamping mechanism (413) movably assembled to the holder (411) and arranged adjacent to the second end portion (4112), wherein the clamping mechanism (413) includes:
an elastic member (4131) assembled to the holder (411); and
an abutting seat (4132) arranged in the accommodating chamber (4113) and connected to the elastic member (4131), wherein, through an elasticity of the elastic member (4131), the abutting seat (4132) is configured to tend to move toward the first end portion (4111), and wherein the abutting seat (4132) includes a flat edge (4132a) for abutting an end of the mobile apparatus (M) arranged away from the charging port.

11. A cutting and attaching system for a screen protector (200S) having a high hardness, **characterized by** comprising:
a cutting apparatus (100) including:
a carrying machine (2);
a displacement mechanism (3) being assembled to the carrying machine (2) and being movable relative to the carrying machine (2);
a processing module (4) assembled to the carrying machine (2), wherein the processing module (4) is electrically coupled to the displacement mechanism (3) and is configured to move the displacement mechanism (3) along a first cutting path and a second cutting path that is different from the first cutting path, and wherein the second cutting path corresponds to a contour of a screen of a mobile apparatus (M); and
a cutter (1) assembled to the displacement mechanism (3) and having a cutting segment (13) exposed from the displacement mechanism (3), wherein the displacement mechanism (3) is configured to move the cutting segment (13) between an upper position and a lower position that is lower than the upper position; and
a universal sheet (200) that is configured to be cut to form the screen protector (200S) through a cutting process of the cutting apparatus (100), wherein the universal sheet (200) includes:
a usage layer (203) including a hardened film (2031) and a bonding film (2032) that is formed on the hardened film (2031), wherein a hardness of the hardened film (2031) is at least 5H;
a buffer layer (202) having a hardness that is less than the hardness of the hardened film (2031);
a release layer (204) attached onto the bonding film (2032); and
a bottom layer (201) attached onto the release layer (204);
wherein, when the universal sheet (200) is placed on the cutting apparatus (100) under the cutting process, the bottom layer (201) of the universal sheet (200) is fixed to the carrying machine (2), the displacement mechanism (3) is driven by the processing module (4) to enable the cutting segment (13) of the cutter (1) at the upper position to cut the buffer layer (202) along the first cutting path for forming a positioning contour (S2), and to cut the buffer layer (202) and the usage layer (203) along the second cutting path for forming a screen contour (S1), such that the buffer layer (202) and the usage layer (203) jointly define a screen region (200S1) and a positioning region (200S2) that is arranged at one side of the screen region (200S1) and that has a plurality of positioning holes (2022) and an arrangement tab (2023); and
a film applicator (400) located at a downstream of the cutting apparatus (100) and including:
a localizer (412) configured to be detachably inserted into a charging port of the mobile apparatus (M); and
a plurality of positioning pillars (4114) formed on the localizer (412) and having a relative position that is identical to a relative position of the positioning holes (2022) of the positioning contour (S2), wherein a relative position between the positioning pillars (4114) and the screen of the mobile apparatus (M) is identical to a relative position between the positioning holes (2022) and the screen contour (S1);
wherein, when the localizer (412) is inserted into the charging port of the mobile apparatus (M), the positioning holes (2022) of the positioning region (200S2) are respectively sleeved at the positioning pillars (4114) to place the release layer (204) toward the screen of the mobile apparatus (M), and the release layer (204) is configured to be removed from the bonding film (2032) for removing particles on the screen through electrostatic adsorption.

12. The cutting and attaching system according to claim 11, wherein, when the universal sheet (200) is placed on the cutting apparatus (100) under the cutting process, the bottom layer (201) of the universal sheet (200) is fixed to the carrying machine (2), the displacement mechanism (3) is driven by the processing module (4) to enable the cutting segment (13) of the cutter (1) at the lower position to cut the buffer layer (202), the usage layer (203), and the release layer (204) along the third cutting path for forming a peripheral contour (S3) that surrounds the positioning contour (S2) and the screen contour (S1), and wherein a portion of the buffer layer (202), a portion of the usage layer (203), and a portion of the release layer (204) are arranged outside of the peripheral contour (S3) and are removed.

13. The cutting and attaching system according to claim 11, wherein the buffer layer (202) includes a first buffer film (202a) attached onto the hardened film (2031) and a second buffer film (202b) that is attached onto the first buffer film (202a), wherein the hardness of the hardened film (2031), a hardness of the first buffer film (202a), and a hardness of the second buffer film (202b) sequentially decrease.

14. The cutting and attaching system according to claim 13, wherein the universal sheet (200) has a printed pattern (2021) that is formed between the first buffer film (202a) and the second buffer film (202b).

15. The cutting and attaching system according to claim 13, wherein a thickness of the hardened film (2031), a thickness of the first buffer film (202a), and a thickness of the second buffer film (202b) sequentially decrease.
